(19)

Europäisches Patentamt

European Patent Office

Office européen des brevets

(11) **EP 4 406 397 A1**

(12) **EUROPEAN PATENT APPLICATION**
published in accordance with Art. 153(4) EPC

(43) Date of publication:
**31.07.2024 Bulletin 2024/31**

(21) Application number: **22857941.3**

(22) Date of filing: **17.10.2022**

(51) International Patent Classification (IPC):
**A01D 34/73** (2006.01)     **A01D 34/74** (2006.01)

(52) Cooperative Patent Classification (CPC):
**A01D 34/73; A01D 34/74**

(86) International application number:
**PCT/CN2022/125652**

(87) International publication number:
**WO 2023/020632 (23.02.2023 Gazette 2023/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Positec Power Tools (Suzhou) Co., Ltd.**
**Suzhou, Jiangsu 215123 (CN)**

(72) Inventors:
• **JIAO, Shiping**
  **Suzhou, Jiangsu 215123 (CN)**

• **DU, Jiang**
  **Suzhou, Jiangsu 215123 (CN)**
• **ZHA, Xiahong**
  **Suzhou, Jiangsu 215123 (CN)**
• **LIU, Changhua**
  **Suzhou, Jiangsu 215123 (CN)**
• **LIU, Yangbing**
  **Suzhou, Jiangsu 215123 (CN)**

(74) Representative: **Kilburn & Strode LLP**
**Lacon London**
**84 Theobalds Road**
**Holborn**
**London WC1X 8NL (GB)**

(54) **CUTTING MECHANISM, AND LAWN MOWER**

(57)     This application provides a cutting mechanism and a lawn mower. The cutting mechanism includes a driving device and a cutting device connected with the driving device, the cutting device is configured to execute a cutting task under driving of the driving device, the cutting device includes a plurality of cutting units stacked in a first direction, each cutting unit includes at least one cutting element, and each cutting unit forms a cutting domain when executing the cutting task; in at least one second direction perpendicular to the first direction, a first preset spacing S1 is provided between edges of cutting domains of two cutting units closest to a working surface, the first preset spacing S1 meets $S1 \geq \dfrac{30000V}{nN_2}$, and the edges of the cutting domains of the cutting units closest to the working surface are closer to the driving device in the second direction, where, V represents a moving speed of the cutting device during the execution of the cutting task, n represents a rotational speed of the cutting device during the execution of the cutting task, and $N_2$ represents the number of the cutting elements in each cutting unit.

FIG. 10

**Description**

**Technical Field**

This application relates to the technical field of garden tools, in particular to a cutting mechanism and a lawn mower.

**Background**

A lawn mower in the related art generally uses a gasoline engine to drive a straight knife to rotate for a cutting operation. To improve a cutting effect, two ends of the straight knife are provided with widened flipping edges, so that when a blade rotates, an air flow may be formed in an inner cavity of the lawn mower. The air flow may throw cut broken grass in the cavity so as to have a chance to cut the broken grass again, resulting in finer and more crushed broken grass finally. However, this type of lawn mower has a large size (difficult to pass smoothly in a user's home yard), high energy consumption, high noise, and a relatively random quality of grass crushing.

**SUMMARY**

In view of this, this example of this application provides a cutting mechanism and a lawn mower to solve at least one problem present in the background, thereby improving cutting quality of the cutting mechanism.

In a first aspect, a cutting mechanism is provided, and includes a driving device and a cutting device connected with the driving device, the cutting device is configured to execute a cutting task under driving of the driving device, the cutting device includes a plurality of cutting units stacked in a first direction, each cutting unit includes at least one cutting element, and each cutting unit forms a cutting domain when executing the cutting task; where

in at least one second direction perpendicular to the first direction, a first preset spacing S 1 is provided between edges of cutting domains of two cutting units closest to a working surface, the first preset spacing S1 meets $S1 \geq \frac{30000V}{nN_2}$, and the edges of the cutting domains of the cutting units closest to the working surface are closer to the driving device in the second direction,

where, V represents a moving speed of the cutting device during the execution of the cutting task, n represents a rotational speed of the cutting device during the execution of the cutting task, and $N_2$ represents the number of the cutting elements in each cutting unit.

In a second aspect, a cutting mechanism is provided, and includes a driving device and a cutting device connected with the driving device, the cutting device is configured to execute a cutting task under driving of the driving device, the cutting device includes a plurality of cutting units stacked in a first direction, and each cutting unit includes at least one cutting element; where

in two cutting units closest to a working surface, one cutting unit has a first cutting element arranged in a first phase, the other cutting unit has a second cutting element arranged in a second phase, and a phase difference between the first cutting element and the second cutting element is configured to cause the first cutting element and the second cutting element to sequentially cut grass at the same position within a single rotation cycle of the cutting device.

In a third aspect, a cutting mechanism is provided, and includes a driving device and a cutting device connected with the driving device, the cutting device is configured to execute a cutting task under driving of the driving device, the cutting device includes a plurality of cutting units stacked in a first direction, and each cutting unit includes at least one cutting element; where

the plurality of cutting units are connected with the driving device through a connecting portion; a bottom cutting unit closest to a working surface has an exposed cutting part beyond the connecting portion; and in at least one second direction perpendicular to the first direction, a length L of the exposed cutting part and the single cutting amount X0 of the cutting device meets a relationship equation: L/X0$\geq$2.3; where, the single cutting amount X0 represents a length of a part of the cutting device that comes into contact with grass in a single cutting process.

In a fourth aspect, a cutting mechanism is provided, and includes a driving device and a cutting device connected with the driving device, the cutting device is configured to execute a cutting task under driving of the driving device, the cutting device includes a plurality of cutting units stacked in a first direction, each cutting unit includes at least one cutting element, and each cutting unit forms a cutting domain when executing the cutting task; where

in at least one second direction perpendicular to the first direction, a first preset spacing S1 is provided between edges of cutting domains of at least one set of two adjacent cutting units, the first preset spacing S1 meets $S1 \geq \frac{30000V}{nN_2}$, and an edge of a cutting domain of a cutting unit close to a working surface is closer to the driving device, where, V represents a moving speed of the cutting device during the execution of the cutting task, n represents a rotational speed of the cutting device during the execution of the cutting task, and N_2 represents the number of the cutting elements in each cutting unit.

In a fifth aspect, a cutting mechanism is provided, and includes a driving device and a cutting device connected with the driving device, the cutting device is configured to execute a cutting task under driving of the driving device, the cutting device includes a plurality of cutting units stacked in a first direction, and each cutting unit includes at least one cutting element; where

in at least one set of two adjacent cutting units, one cutting unit has a first cutting element arranged in a first phase, the other cutting unit has a second cutting element arranged in a second phase, and a phase difference between the first cutting element and the second cutting element is configured to cause the first cutting element and the second cutting element to sequentially cut grass at the same position within a single rotation cycle of the cutting device.

In a sixth aspect, a lawn mower is provided, and includes: a housing; a moving device, connected with the housing and driving the lawn mower to move; and the cutting mechanism as described in the first aspect, installed on the housing and used for executing the cutting task.

The cutting device of this application is provided with the plurality of cutting units at different heights, the cutting domains of any two adjacent cutting units has the spacing S1 in the at least one second direction perpendicular to a stacking direction of the plurality of cutting units, and $S1 \geq \frac{30000V}{nN_2}$. The larger the value of S1, the more conducive it is to relieving a grass leakage situation during working of the cutting device, thereby improving a cutting quality and efficiency of the cutting mechanism. Meanwhile, the closer the value of S1 is to $\frac{30000V}{nN_2}$, the more conducive it is to ensuring overall compactness and miniaturization of the cutting mechanism while relieving grass leakage, thereby ensuring the overall compactness and miniaturization of the lawn mower (which can smoothly pass through a user's home yard) with the cutting mechanism installed.

In addition, when the cutting device performs cutting, the plurality of cutting units located at different heights of the cutting device can cut the grass in the same area multiple times to crush the grass. Compared to a traditional gasoline-engine-driven lawn mowing device, the cutting device of this application does not form an air flow, greatly reducing power consumption required for lawn mowing by the cutting device.

**BRIEF DESCRIPTION OF THE DRAWINGS**

FIG. 1 is a schematic structural diagram of a cutting device.

FIG. 2 is a schematic structural diagram of another cutting device.

FIG. 3 is a schematic diagram of another grass leakage situation of a cutting device.

FIG. 4 is a schematic structural diagram of a cutting device provided by an example of this application.

FIG. 5 is a bottom view of a cutting device provided by another example of this application.

FIG. 6 is a bottom view of a cutting device provided by yet another example of this application.

FIG. 7 is a schematic structural diagram of a cutting device provided by another example of this application.

FIG. 8 is a schematic structural diagram of a cutting device provided by another example of this application.

FIG. 9 is a schematic structural diagram of a cutting device provided by another example of this application.

FIG. 10 is a schematic structural diagram of a cutting device provided by another example of this application.

FIG. 11 is a schematic structural diagram of a lawn mower provided by an example of this application.

FIG. 12 is a schematic flowchart of a preparation method of a cutting mechanism provided by an example of this application.

## DETAILED DESCRIPTION

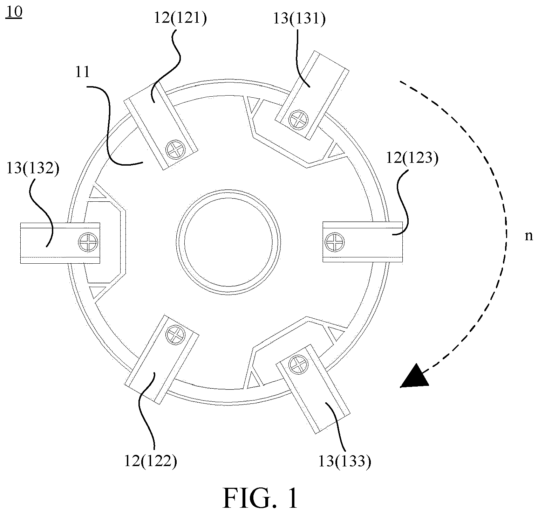

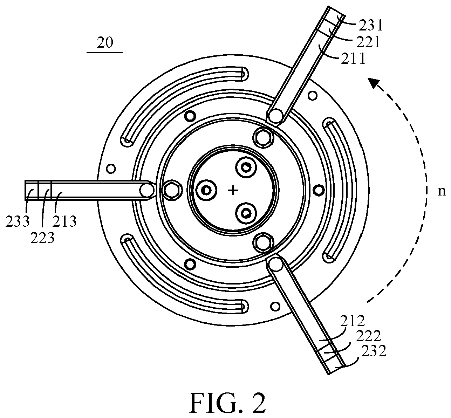

In order to facilitate the understanding of this example of this application, detailed examples will be given first with reference to FIG. 1 and FIG. 2 to illustrate the cutting device in the prior art and its existing problems.

As is well known, a straight knife cutting device driven by a gasoline engine forms an upward air flow in an inner cavity of a lawn mower through high-speed rotation of a straight knife during a cutting operation. Under the action of the upward air flow, broken grass produced by cutting is sucked into the inner cavity, and then under the action of gravity, the broken grass falls back to a cutting area of the straight knife. At this time, the straight knife can cut the broken grass again to achieve a purpose of crushing the grass. However, this straight knife cutting device requires high energy consumption during grass crushing due to the need for high-speed rotation to provide the upward air flow.

In order to reduce the energy consumption of grass crushing, a cutting device not driven by a gasoline engine may also be adopted. FIG. 1 shows a schematic bottom view of a structure of a cutting device 10 with a plurality of layers of blades in the prior art. The cutting device includes a cutterhead 11, and a first cutting unit 12 and a second cutting unit 13 which are arranged on the cutterhead 11, where the first cutting unit 12 includes blades 121, 122 and 123, and the second cutting unit 13 includes blades 131, 132 and 133. The cutting device 10 has a double-layer structure, that is, the two cutting units 12 and 13 in FIG. 1 are respectively arranged at different heights of the cutting device 10, so that the cutting device 10 can crush grass during a cutting operation. In this way, the grass may be crushed without the need for forming the air flow, thereby achieving the purpose of reducing energy consumption.

However, structural parameters of the cutting device 10 are generally designed based on experience. This design mode cannot guarantee a reasonable match between the structural parameters of the cutting device and running parameters of a lawn mower, resulting in difficulty in ensuring a cutting quality and thus affecting cutting efficiency.

Exemplarily, as shown in FIG. 1, the blade 121 in the first cutting unit 12 and the blade 131 in the second cutting unit 13 are arranged in different phases. When performing a lawn mowing operation, a rotation direction of the cutting device 10 is clockwise when viewed upwards. After the blade 131 located on an upper layer cuts into grass in an area, grass bodies tilt under an inertia effect. At this time, when the lower layer of blade 121 adjacent to the blade 131 passes through the area, the grass bodies have not fully rebounded, causing the lower layer of blade 121 to sweep over the tilted grass bodies, and unable to effectively cut into the grass, resulting in grass leakage. Moreover, after cutting, it is prone to leaving long grass cuttings, which affects the smoothness and appearance of a grass surface. For the convenience of description, this kind of grass leakage situation may be referred to as temporal grass leakage.

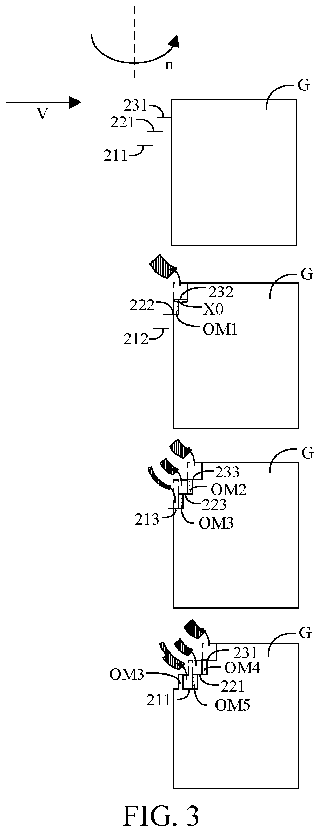

Exemplarily, FIG. 2 shows a schematic bottom view of a structure of another cutting device 20 with a plurality of layers of blades, and FIG. 3 shows another grass leakage situation when the cutting device 20 shown in FIG. 2 executes a specific cutting task. Please refer to FIG. 2, blades 231, 221, and 211 are blades arranged in the same phase (a first column of blades), blades 232, 222, and 212 are blades arranged in the same phase (a second column of blades), and blades 233, 223, and 213 are blades arranged in the same phase (a third column of blades). The phases of the three columns of blades are different, and the rotation direction is counterclockwise when viewed upwards. Furthermore, combining with FIG. 3, it can be seen that the cutting device 20 moves forward at a speed V, and meanwhile, under the driving of the driving device, each column of blades may cut grass G. However, if the blades in each column of blades are arranged compactly in a horizontal direction, it is prone to forming grass leakage and leaving long grass cuttings after cutting, which affects the smoothness and appearance of the grass surface. For the convenience of description, this kind of grass leakage situation may be referred to as structural grass leakage.

As an example, a position where the first column of blades exactly comes into contact with the grass G but has not yet started cutting may be taken as an initial position of the cutting device 20, when the cutting device 20 moves forward and rotates to the second column of blades to cut the grass, the blade 232 will first cut grass with a length of X0, however, under the inertia effect, grass bodies of the grass with the length of X0 will tilt, causing the blade 222 to sweep over the tilted grass bodies and form a missed cut on an OM1 part of grass. When the cutting device 20 continues to move forward and rotate to the third column of blades to cut the grass, the blade 233 will continue to cut the grass with the length of X0 forward, however, under the inertia effect, the grass bodies of the grass with the length of X0 will also tilt, causing the blade 223 to sweep over the tilted grass bodies and form a missed cut on an OM2 part of grass. Similarly, the blade 213 will also form a missed cut on an OM3 part of grass. Meanwhile, the blade 213 will also cut off the previously uncut OM1 part of grass along with the grass with the grass bodies that are not tilted, leaving behind longer grass cuttings. When the cutting device 20 continues to move forward and rotate again to the first column of blades to cut the grass, the blade 231 will still continue to cut the grass with the length of X0 forward, however, the grass bodies of this part of grass with the length of X0 will tilt, causing the blade 221 to form a missed cut on an OM4 part of grass. Similarly, the blade 211 will form a missed cut on an OM5 part of grass. Meanwhile, the blade 211 will further cut off the previously uncut OM2 part of the grass along with the grass with the grass bodies that are not tilted, leaving behind longer grass cuttings. However, since the blades 211, 212 and 213 are the bottom layer blades, the OM3 part of grass that was missed will remain on the grass surface and will not be cut again, forming the grass leakage.

In order to solve the above problems, this example of this application provides a cutting device. By reasonably configuring structural parameters and running parameters of the cutting device, both cutting efficiency and a cutting quality can be considered, and meanwhile, it is conducive to ensuring the miniaturization of an overall size of the lawn mower with the cutting mechanism installed. On the other hand, the cutting device provided by this example of this application may crush grass by setting structural parameters among a plurality of cutting units, without the need for high-speed rotation to generate an upward air flow, which is conducive to reducing the power consumption required by the cutting device for crushing grass.

The technical solutions in this example of this application will be clearly and completely described in the following with reference to the accompanying drawings in this example of this application. Apparently, the described examples are only some rather than all of the examples of this application. It is to be noted that words "up", "down", "left", "right", "inside", "outside", etc. used in this application are only to illustrate this application by referring to the accompanying drawings and are not used as limiting terms.

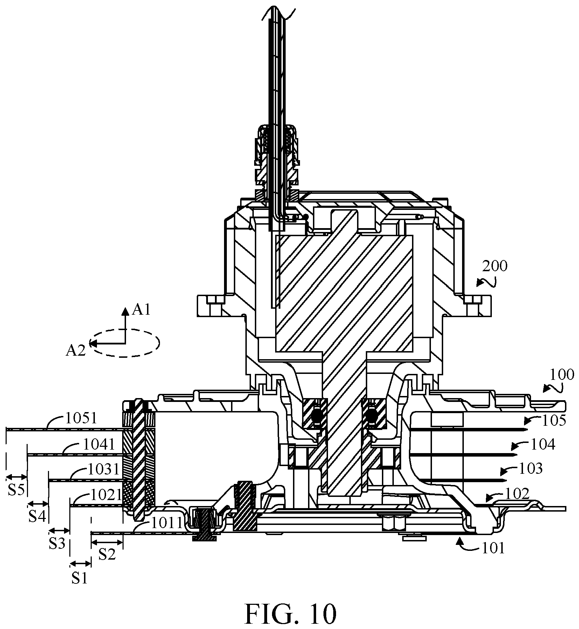

FIG. 10 shows a cutting mechanism provided by an example of this application. The cutting mechanism includes a driving device 200 and a cutting device 100 connected with the driving device 200. The cutting device 100 includes a plurality of cutting units stacked in a first direction A1, and the cutting units are configured to execute a cutting task under driving of the driving device. Optionally, the driving device 200 may include a motor and a motor output shaft, and the cutting device 100 may be connected with the motor output shaft. The driving device 200 may further include a transmission structure in a form of a wheel belt, and the cutting device 100 may be connected with a driving end of the transmission structure.

The cutting device 100 includes the plurality of cutting units 101, 102, 103, 104 and 105 stacked in the first direction A1. Each cutting unit includes at least one cutting element 1011, 1021, 1031, 1041 and 1051, and each cutting unit forms a cutting domain when executing the cutting task. Optionally, each cutting unit may include one or more discrete blades. Optionally, contours of the cutting domains formed by the different cutting units may be the same or different. Optionally, contour shapes of the cutting domains may be regular, such as a circle, ellipse, square, rectangle and diamond. Optionally, edges of the cutting domains may also be irregular.

In at least one second direction A2 perpendicular to the first direction A1, a first preset spacing S1 is provided between edges of cutting domains of two cutting units closest to a working surface, the first preset spacing S1 meets

$$S1 \geq \frac{30000V}{nN_2}$$

, and the edges of the cutting domains of the cutting units closest to the working surface are closer to the driving device 200 in the second direction A2, where, V represents a moving speed of the cutting device 100 during the execution of the cutting task, n represents a rotational speed of the cutting device 100 during the execution of the cutting task, and $N_2$ represents the number of the cutting elements in the cutting units. The working surface at least includes a lawn surface, and the lawn surface may be a plane, a slope, an undulating surface, etc. It may be understood that if a long blade is used as the cutting unit and the driving device is connected with a blade body of the long blade, the number of cutting elements in this layer of cutting unit may be considered as 2, and a blade body part from the connection to the end of the long blade may be regarded as one cutting element. The edges of the cutting domains of the cutting units closest to the work surface is closer to the driving device 200 in the second direction A2, indicating that during the execution of the cutting task, the edge of the cutting domain of the cutting unit on the bottom layer is closer to the driving device 200 compared to the other cutting unit among the two cutting units closest to the working surface.

As shown in FIG. 10, the two cutting units closest to the working surface are cutting units 101 and 102. The cutting unit 101 on the bottom layer may form a first cutting domain when executing the cutting task, and the other cutting unit 102 may form a second cutting domain when executing the cutting task. The edge of the first cutting domain and the edge of the second cutting domain have a first preset spacing S1 greater than or equal to $\frac{30000V}{nN_2}$ in at least one second direction A2. In other words, the edges of the first cutting domain and the second cutting domain may further have a second preset spacing in another second direction A2, and in these second directions A2, the edge of the first cutting domain of the cutting unit 101 closest to the working surface is closer to the driving device 200 in these second directions A2 compared to the edge of the second cutting domain of the cutting unit 102.

Optionally, as shown in FIG. 10, the cutting unit 101 has three discrete cutting elements 1011, and the cutting unit 102 has three discrete cutting elements 1021. Rotation trajectories of ends of the cutting elements 1011 farthest from a driving shaft may form the edge of the first cutting domain; and similarly, rotation trajectories of ends of the cutting elements 1021 farthest from the driving shaft may form the edge of the second cutting domain. Optionally, as shown in FIG. 10, the first preset spacing S1 between the edge of the first cutting domain and the edge of the second cutting domain may be expressed as a spacing between an end of the cutting element 1051 farthest from its installation shaft and an end of the cutting element 1041 farthest from its installation shaft in the second direction A2.

From the analysis of structural grass leakage mentioned above, it can be seen that if the blades of the adjacent layer at the bottom of the cutting device are arranged compactly in a horizontal direction, it is prone to forming structural grass leakage. Therefore, as shown in FIG. 3, theoretically, if the spacing between the edge of the cutting domain of the cutting unit on the bottom layer and the edge of the cutting domain of its adjacent cutting unit in the horizontal direction is greater than or equal to its single cutting amount X0, this structural grass leakage problem can be solved.

The single cutting amount X0 of the cutting element represents a length of a part of each cutting element that comes into contact with grass in a single cutting process, in other words, the length of grass that each cutting element can cut in a single cutting process. For example, the rotational speed of the cutting device is n (r/min), and the moving speed of the cutting device in a running direction of the lawn mower is V (m/s). For each rotation of the cutting device, its moving distance (i.e. the length of grass cut by the cutting device in the movement direction) is $L_1 = \dfrac{60*1000V}{n}$ . Therefore, when each cutting unit has $N_2$ (such as the cutting device shown in FIG. 10, where the value of $N_2$ is 3) cutting elements, the single cutting amount $X_0$ (mm) of the cutting elements is:

$$X_0 = \frac{L_1}{N_2} = \frac{60*1000V}{nN_2}$$

However, in actual cutting, grass bodies are not absolutely straight. Due to the gravity effect of the grass itself, the grass bodies will actually tilt to one side. Therefore, the horizontal spacing of the edges of the cutting domains of the adjacent layer of cutting unit on the bottom may be adjusted based on X0 to actually test the cutting effect of the cutting mechanism.

Table 1 shows 14 sets of exemplary parameter data in test data, and marks several sets of parameter data with a better cutting effect. The judgment of the cutting effect may be compared to a cutting effect of a traditional gasoline-engine-driven lawn mower. For example, if the cutting effect is basically the same as that of the traditional gasoline-engine-driven lawn mower, it may be considered that the cutting mechanism corresponding to this set of data has a better cutting effect. Exemplarily, the cutting effect may be evaluated based on the flatness of a grass surface cutting port and the spread of grass on the grass surface. For example, if there are slight waves at the grass surface cutting port and a small amount of grass evenly spread on the grass surface, it may be considered that the cutting mechanism corresponding to this set of data has a better cutting effect.

Table 1

| Serial number | Speed V (m/s) | Rotational speed n (r/min) | Single-layer blade number N2 | Single cutting amount X0 (mm) | First preset spacing S1 (mm) | S1/X0 | Cutting time difference T (ms) | Blade kinetic energy E0 (J) | E0/X0 | Result |
|---|---|---|---|---|---|---|---|---|---|---|
| 1 | 2 | 2000 | 2 | 30 | 25 | 0.833 | 15 | 3.120 | 0.104 | Good |
| 2 | 2 | 2000 | 2 | 30 | 15 | 0.500 | 15 | 3.120 | 0.104 | Poor |
| 3 | 2 | 2500 | 2 | 24 | 25 | 1.042 | 12 | 2.911 | 0.121 | Good |
| 4 | 2 | 2900 | 2 | 20.68965517 | 25 | 1.208 | 10.34482759 | 2.453 | 0.119 | Good |
| 5 | 2 | 2900 | 2 | 20.68965517 | 15 | 0.725 | 10.34482759 | 2.453 | 0.119 | Poor |
| 6 | 2 | 2000 | 3 | 20 | 25 | 1.250 | 10 | 2.212 | 0.111 | Good |
| 7 | 2 | 2500 | 3 | 16 | 15 | 0.938 | 8 | 2.038 | 0.127 | Good |
| 8 | 2 | 2900 | 3 | 13.79310345 | 15 | 1.088 | 6.896551724 | 1.718 | 0.125 | Good |
| 9 | 2 | 3200 | 3 | 12.5 | 10 | 0.800 | 6.25 | 1.914 | 0.153 | Good |
| 10 | 2 | 3200 | 3 | 12.5 | 8 | 0.640 | 6.25 | 1.914 | 0.153 | Poor |
| 11 | 2 | 3200 | 3 | 12.5 | 12 | 0.960 | 6.25 | 1.914 | 0.153 | Good |
| 12 | 2 | 3000 | 4 | 10 | 14 | 1.400 | 5 | 1.370 | 0.137 | Good |
| 13 | 2 | 3200 | 4 | 9.375 | 12 | 1.280 | 4.6875 | 1.467 | 0.157 | Good |
| 14 | 2 | 2500 | 5 | 9.6 | 4.8 | 0.500 | 4.8 | 1.271 | 0.132 | Good |

It can be seen that the cutting mechanisms corresponding to the data with serial numbers 1, 3, 4, 6, 7, 8, 9, 11, 12, 13 and 14 in Table 1 have the better cutting effects. After conducting research on household lawns of American users, the cutting mechanism corresponding to the data with the serial number 9 may meet cutting needs of most American household user's lawns. In this set of data, the first preset spacing S1 is 0.8X0. The serial number 14 shows a minimum optional value of 4.8 mm, approximately 0.5X0, for the first preset spacing S1 when the single-layer blade number $N_2$ is 5.

It can be understood that in theory, the larger the value of S1, the more conducive it is to relieving the grass leakage situation caused by grass tilting during the working of the cutting device, thereby improving the cutting quality and cutting efficiency of the cutting mechanism. However, the larger S1 is, the size of the cutting mechanism is also prone to being too large, and the overall size of the lawn mower with the cutting mechanism installed is also prone to being too large, which is not conducive to the miniaturization of the lawn mower. Therefore, the closer the value of S1 is to or equal to $\frac{30000V}{nN_2}$, the more conducive it is to ensuring the overall compactness and miniaturization of the cutting mechanism while relieving grass leakage, thereby ensuring the compactness and miniaturization of the lawn mower (which can smoothly pass through the user's home courtyard) with the cutting mechanism installed.

Through the above settings, when executing the cutting operation, the cutting elements in the cutting unit 102 located on the upper layer will first cut into grass, and then the cutting elements of the cutting unit on the bottom layer will cut the grass again. Due to the appropriate first preset spacing between the edge of the first cutting domain and the edge of the second cutting domain in the at least one second direction A2, grass leakage similar to an OM3 part can be avoided, thereby effectively relieving the aforementioned structural grass leakage problem, improving the cutting quality, and ensuring smoothness and appearance of the lawn surface. On the other hand, while relieving grass leakage, the first preset spacing S1 can also be set to be smaller (such as less than X0), which is conducive to controlling the overall size of the lawn mower with the cutting mechanism installed.

In addition, when the cutting device 100 performs cutting, the plurality of cutting units located at different heights of the cutting device 100 can cut the grass in the same area multiple times to crush the grass. Compared to a traditional gasoline-engine-driven straight knife lawn mowing device, the cutting device of this application does not form an air flow, greatly reducing power consumption required for lawn mowing by the cutting device.

Exemplarily, Table 2 shows test data of a cutting energy consumption ratio (converted to cutting energy consumption when cutting 1000 square meters for the convenience of comparison) of the cutting mechanism when comparing different brands of ZTRs during lawn mowing under the same working conditions in different examples of this application.

Table 2

| Grass variety | Cut grass length | Cutting mechanism type | Cutting energy consumption ratio for 1000 square meters |
|---|---|---|---|
| Dry ryegrass | Cut 2 inches | Multi-layer knife of this application (5 layers/10 mm intervals) | 0.285 |
| | | A-brand ZTR | 1 |
| Dry tall fescue | Cut 2 inches | Multi-layer knife of this application (5 layers/10 mm intervals) | 0.285 |
| | | B-brand ZTR | 1 |
| Dry Bermuda | Cut 3 inches | Multi-layer knife of this application (2 layers/15 mm intervals) | 0.364 |
| | | C-brand ZTR | 1 |
| | | D-brand ZTR | 0.818 |

From Table 2, it can be seen that for different grass varieties, when achieving the expected lawn mowing effect (the expected lawn mowing effect may refer to the lawn mowing effect referred to in Table 1), the cutting energy consumption of the cutting mechanism in this application is only 28% to 44% of the cutting energy consumption of a traditional ZTR model. It can be seen that the cutting mechanism of this application greatly reduces cutting energy consumption compared to a traditional commercial lawn mower, and has high application value and application prospects.

In some implementations, as shown in FIG. 10, the cutting device 100 further has another set of two adjacent cutting units, where one cutting unit has a cutting domain during the execution of the cutting task, and the other cutting unit has another cutting domain during the execution of the cutting task. Taking the cutting units 104 and 105 as examples, the cutting unit 104 has a third cutting domain when executing the cutting task, and the cutting unit 105 has a fourth cutting domain when executing the cutting task. In the at least one second direction A2 perpendicular to the first direction A1, a spacing (for example, a spacing S5 between an edge of the third cutting domain and an edge of the fourth cutting domain) between edges of the cutting domains of the two cutting units is greater than or equal to $\frac{30000V}{nN_2}$, and the edges of the cutting domains of the cutting units close to the working surface are closer to the driving device 200 in the second direction A2. Based on the analysis of structural grass leakage mentioned above, this setting can enable the adjacent cutting units to cut the grass at the same position, thereby reducing the formation of long grass cuttings, allowing more grass to fall to the ground without accumulating on the grass surface, and improving the grass crushing quality of the cutting mechanism. It may be understood that S1 and S5 can be the same or different.

In some implementations, as shown in FIG. 10, in any two adjacent cutting units of the cutting device 100, one cutting unit has a cutting domain during the execution of the cutting task, and the other cutting unit has another cutting domain during the execution of the cutting task. In the at least one second direction A2 perpendicular to the first direction A1, a spacing between edges of the cutting domains of the two cutting units is greater than or equal to $\frac{30000V}{nN_2}$, and the edges of the cutting domains of the cutting units close to the working surface are closer to the driving device 200 in the second direction A2. In other words, the spacings S1, S3, S4, and S5 between the adjacent cutting domains in the cutting device 100 in the at least one second direction A2 are all greater than or equal to $\frac{30000V}{nN_2}$. In this way, the any adjacent cutting units can cut the grass at the same position, thereby reducing the formation of long grass cuttings, allowing the grass to basically fall to the ground without accumulating on the grass surface, and further improving the grass crushing quality of the cutting mechanism. It may be understood that the sizes of S1, S3, S4, and S5 can be exactly the same or not exactly the same.

It is to be pointed out that the moving speed of the cutting device 100 may be different in different cutting scenarios (such as a household cutting scenario and a commercial cutting scenario), for example, it may vary between 1 m/s and 5 m/s, and the rotational speeds of the cutting device 100 may also be different, for example, it may vary between 2000 r/min and 3200 r/min. Similarly, to relieve grass leakage, the number $N_2$ of cutting elements in each cutting unit may also be different, for example, it may vary between 1 to 5. In the above situation, it is still possible to effectively relieve grass leakage, improve the cutting quality, and also take into account the need for miniaturization of the overall size of the cutting mechanism by controlling $S1 \geq \frac{30000V}{nN_2}$.

In some implementations, the first preset spacing S1 meets $S1 \geq \frac{48000V}{nN_2}$. Considering an actual trimming effect of most home courtyards, by controlling $S1 \geq \frac{48000V}{nN_2}$, the cutting quality requirements of most home courtyards can be met, and meanwhile, this lower limit size can also well control the overall size of the lawn mower. Moreover, in optional implementations, the arrangement of three blades (cutting elements) in a single-layer cutting unit is also more likely to save preparation and maintenance costs.

In some implementations of this application, the first preset spacing S1 may be taken as 10 mm≤S1≤25 mm. For example, S1 may be taken as 10 mm, 12 mm, 14 mm, 16 mm, 18 mm, 20 mm, 22 mm, 25 mm, etc. By making S1 meet the above range, it is conducive to make the cutting mechanism meet the needs of relieving grass leakage in most cutting scenarios. Taking Table 1 as an example, for different sets of element parameters of the cutting mechanism that meets the cutting effect, the first preset spacing S1 may be taken as 10 mm, 12 mm, 15 mm, or 25 mm.

In some implementations, a thickness K of each cutting element meets 0.6 mm≤K≤2 mm, for example, it may be 0.6 mm, 0.8 mm, 1 mm, 1.2 mm, 1.4 mm, 1.6 mm, 1.8 mm, or 2 mm. Through the above settings, the blade may be made sharp enough to cut the grass, which helps to reduce a linear speed of the blade and further reduce the power consumption of the cutting device 100. If the thickness is too large, such as greater than 2 mm, although the blade is not prone to breakage after impact, the corresponding driving energy consumption will also increase. If the thickness is too small, such as less than 0.6 mm, the sharper the blade, the lower the energy consumption, but the blade is thin and prone to breakage after impact.

In some implementations, the at least one cutting element has two opposite cutting sides, and each cutting side is provided with a cutting edge. In this way, by controlling the forward and reverse rotation of a motor of the driving device 200, the two cutting sides may cut the grass separately, reducing the loss caused by only one side cutting, which is beneficial for prolonging the service life of the cutting elements and reducing the maintenance cost. In some other implementations, when an edge on one side wears out, the cutting element may also be reversed and reused to save the cost of blade replacement.

In some implementations, the cutting edge of the at least one cutting element is a double-sided edge. Compared to a cutting element with a single-sided edge, the double-sided edge has a more uniform force bearing during cutting due to its double-sided cutting edge, resulting in lower requirements for a cutting angle. However, due to being a single-sided cutting edge, the single-sided edge needs to set a certain cutting angle if needing to ensure force bearing during cutting. In other words, the single-sided edge is more prone to wear during cutting, and compared to the double-sided edge, the single-sided edge has lower durability and shorter service life, which is not conducive to controlling the maintenance cost. Optionally, an angle between the two sides of the double-sided edge may be between 20 degrees and 30 degrees.

In some implementations, each cutting element may also be arranged as a relatively movable structure with its installation portion. For example, it may be arranged as a flail knife structure, which means that there may be a gap between a cutting blade and its installation portion, so that the cutting blade can rotate around an axis of its installation end when subjected to external forces. In this way, when the cutting device rotates, a flail knife may straighten the blade and cut the grass due to inertia. In addition, when encountering obstacles, the flail knife can rotate the blade to avoid damaging the cutting edge of the blade.

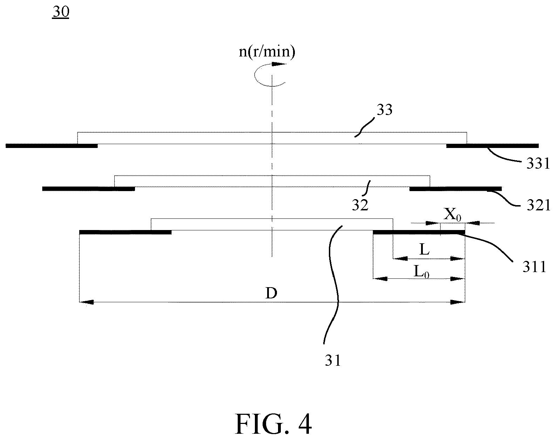

FIG. 4 shows a cutting device 30 provided by another example of this application. The cutting device 30 may be used for a lawn mower (including a self-propelled lawn mower or a hand-pushed lawn mower). The lawn mower may have a driving device. This driving device may drive the cutting device 30 to rotate, so as to drive the plurality of cutting units thereon to rotate for performing a cutting operation. The driving device may be a part of the cutting device 30 or may be independently arranged with the cutting device 30.

The cutting device 30 provided by this example may include a plurality of cutting units 31, 32 and 33. Each cutting unit may include at least one cutting element. The at least one cutting element may be arranged circumferentially by taking a rotation axis of the cutting device as a center. The plurality of cutting units 31, 32, and 33 may be sequentially stacked at different heights of the cutting device 30. During the movement of the lawn mower, the plurality of cutting units 31, 32, and 33 located at different heights may cut the grass multiple times to achieve the purpose of crushing the grass. On the other hand, the cutting device 30 may use the plurality of cutting units 31, 32 and 33 stacked to crush the grass without generating an upward air flow, which can significantly reduce the power consumption of the cutting device 30.

Continuing to refer to FIG. 4, taking the cutting unit 31 and the cutting unit 32 as examples, the cutting unit 32 located on the upper layer has a first cutting element 321, and the cutting unit 31 on the bottom layer (closest to the working surface) has a second cutting element 311. When the first cutting element 321 and the second cutting element 311 are not arranged in the same phase, the cutting device 30 rotates to perform the cutting operation. The first cutting element 321 and the second cutting element 311 have a cutting time difference when cutting grass in the same area. By reasonably setting the running parameters (such as the rotational speed n of the cutting device and the cutting element number $N_2$ of the single-layer cutting unit) of the lawn mower, the cutting time difference is greater than a preset time, so that the first cutting element 321 and the second cutting element 311 can sequentially cut the grass at the same position within a single rotation cycle of the cutting device 30.

The single rotation cycle of the cutting device 30 mentioned above refers to a single cycle in which the cutting device 30 is driven by the driving device to rotate around its central axis once. For example, when the rotational speed of the driving device 30 is 2500 r/min, it takes 24 ms for the driving device 30 to rotate around its central axis once, and the single rotation cycle of the driving device 30 is 24 ms at this time. For example, when the rotational speed of the driving device 30 is 3200 r/min, it takes 18.75 ms for the driving device 30 to rotate around its central axis once, and the single rotation cycle of the driving device 30 is 18.75 ms at this time.

The beneficial effect of this setting is that, within the single rotation cycle, when the grass at the certain position tilts after being cut by the first cutting element 321, the second cutting element 311 located on the lower layer has not yet come into contact with the grass in that area at this time. Due to the existence of the cutting time difference mentioned above, the grass bodies can fully rebound before the second cutting element 311 moves to that area, thereby ensuring that the second cutting element 311 can effectively cut the grass, relieving the problem of temporal grass leakage, and further enabling the cutting device 30 to achieve both high cutting efficiency and high cutting quality during the cutting operation. In addition, the cutting device 30 requires lower power consumption during the cutting operation.

Optionally, continuing to refer to FIG. 4, when the first cutting element 321 and the second cutting element 311 cut the grass at the same position sequentially, ground clearances of the first cutting element 321 and the second cutting element 311 may be smaller than a ground clearance of a highest point of the grass. In this way, it is ensured that both the first cutting element 321 and the second cutting element 311 can cut the grass in the area when passing through the grass in the same area.

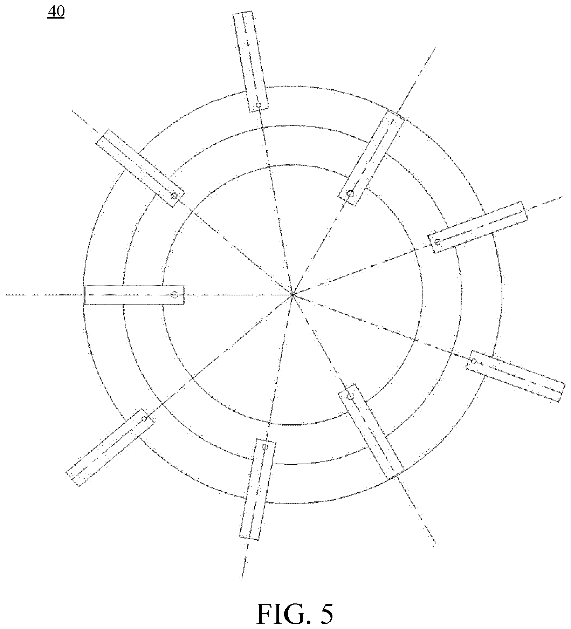

Optionally, the first cutting element 321 and the second cutting element 311 are arranged adjacent to each other in phase, which is conducive to further ensuring the cutting quality and improving the cutting efficiency of the cutting device 30. In this example, a phase arrangement mode of each cutting unit only needs to meet the above conditions, which is not specifically limited by this example of this application. For example, as an implementation, as shown in FIG. 5, the cutting units of different layers in the cutting device 40 are arranged in a circumferential misalignment mode, that is, the phases of the plurality of cutting elements in each cutting unit are not the same. Specifically, if the plurality of cutting elements in each cutting unit are projected onto a plane perpendicular to a rotation axis of the cutting device, there will be no overlap between the projections of the cutting elements. At this time, by setting the running parameters of the lawn mower reasonably, in a process of a walking operation of the cutting device, after the cutting element on the upper layer completes the cutting, the cutting element located on the lower layer will perform secondary cutting on the grass in the same position at a preset time interval (the time interval is sufficient to ensure that the grass bodies can fully rebound), the cutting device can be maximally utilized, the cutting efficiency is significantly improved, and to some extent, the power consumption of the lawn mower is reduced.

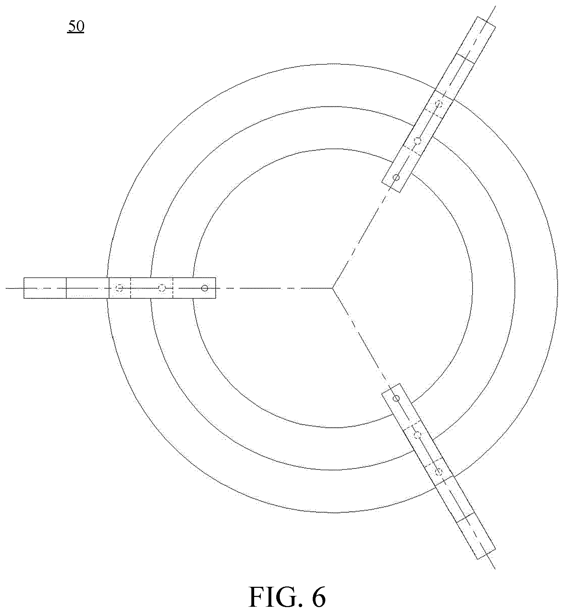

As another implementation, as shown in FIG. 6, the plurality of cutting elements in the cutting device 50 are stacked up and down to form multiple columns of cutting elements, where each cutting element in each column of cutting elements has the same phase. In other words, if the plurality of cutting elements in each cutting unit are projected onto a plane perpendicular to a rotation axis of the cutting device, there is overlap between the projections of the plurality of cutting elements in each column of cutting elements. More specifically, on the plane perpendicular to the rotation axis of the cutting device, a plurality of overlapping areas are formed between the projections of the plurality of cutting elements in each column of cutting elements, and the plurality of overlapping areas are located on the same straight line. Through this setting, the cutting elements of adjacent phases on the upper and lower layers have the maximum time difference when cutting the grass in the same area, so that the grass bodies can fully rebound to be cut by the cutting elements (hereinafter referred to as adjacent cutting elements) of the adjacent phases and the adjacent layers, thereby improving the cutting efficiency and the cutting quality. Specifically, when the rotational speed of the cutting device 50 is n (r/min), the maximum cutting time difference (in milliseconds, ms) between the adjacent cutting elements is $(60*1000)/(nN_2)$, where $N_2$ represents the number of the cutting elements in each cutting unit.

Optionally, the cutting time difference between any adjacent cutting elements is greater than or equal to the preset time, so that the two cutting elements can sequentially cut the grass at the same position within a single rotation cycle of the cutting device 50. This is conducive to further balancing the cutting efficiency and the cutting quality.

This example of this application does not impose specific limitations on the value of the cutting time difference between the adjacent cutting elements. For example, the cutting time difference may be greater than or equal to 5.5 ms, allowing the grass bodies to fully rebound before cut by the blade on the lower layer. For example, the cutting time difference may be taken as 5.7 ms, 6.25 ms, 7 ms, 8 ms, 9 ms, 11 ms, 12 ms, etc. If the cutting time difference is set to be less than 5.5 ms, the rotational speed is usually too high. On the one hand, the cutting time difference is too small to make the grass bodies rebound, affecting the cutting efficiency and grass crushing quality. On the other hand, it can also lead to an increase in power consumption. The larger the cutting time difference between the adjacent cutting elements, the more sufficient the rebound of the grass bodies, resulting in the higher cutting efficiency. Furthermore, the cutting time difference may be set to be greater than or equal to 8ms.

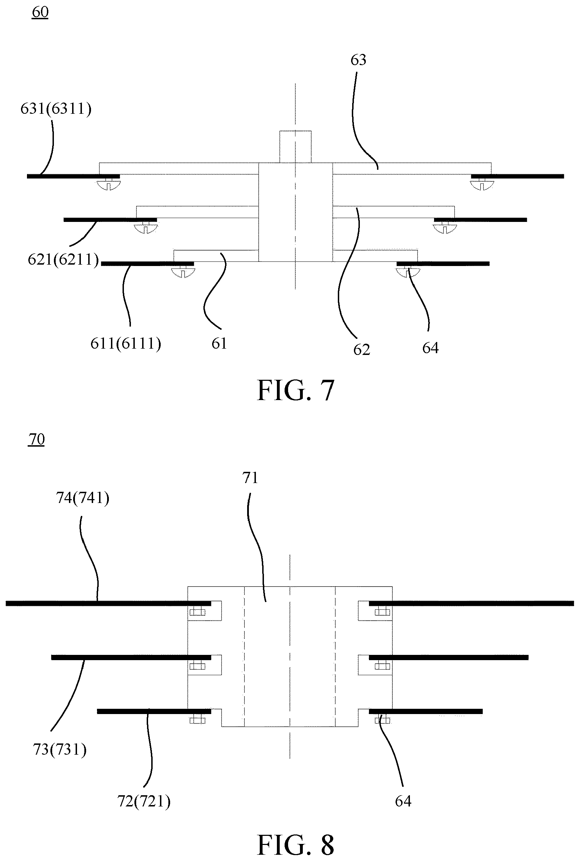

This example of this application does not limit the specific structure of the cutting device, and any structural form that can meet the functions described in this example of this application is within the scope of protection of this application. For example, as an implementation, as shown in FIG. 7, a cutting device 60 may include a plurality of layers of stacked cutterheads 61, 62 and 63. Cutting units 611, 621 and 631 are respectively installed on the cutterheads 61, 62 and 63, and the driving device drives the cutterheads 61, 62 and 63 to rotate, thereby driving cutting elements 6111, 6211 and 6311 to operate. The shape of the cutterheads 61, 62 and 63 is preferably circular. The circular cutterheads have simple processing technology, uniform quality distribution, and good motion characteristics. Certainly, it may also be arranged as any other shape according to actual needs.

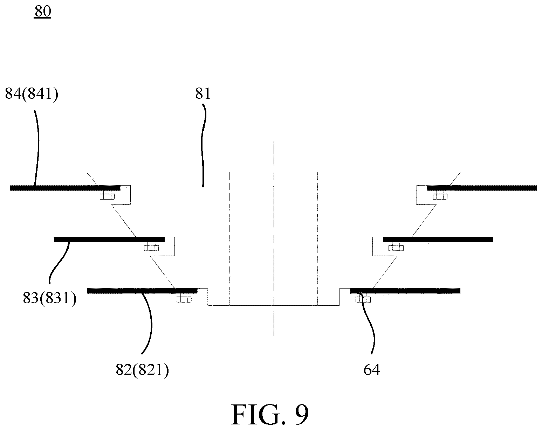

In another implementation, referring to FIG. 8, a cutting device 70 may include a bracket 71, and a plurality of cutting units 72, 73 and 74 installed on the bracket. The driving device drives the bracket to rotate, thereby driving the cutting elements 721, 731 and 741 to rotate for a cutting operation. This example does not impose specific limitations on the structural form of the bracket. For example, as shown in FIG. 8, the bracket 71 may be arranged as a cylindrical shape (i.e. a longitudinal section of the bracket 71 is rectangular). The cylindrical bracket is easy to process and low in cost. The lengths of the cutting elements 721, 731 and 741 in the plurality of cutting units 72, 73 and 74 may be set to increase sequentially from bottom to top, so that cutting diameters of the cutting units 72, 73 and 74 are sequentially increased. As another implementation, as shown in FIG. 9, a bracket 81 may be arranged as a circular truncated cone shape (i.e., a longitudinal section of the bracket 81 is an inverted trapezoid). The lengths of the cutting elements 821, 831 and 841 in the plurality of cutting units 82, 83 and 84 may be set to be equal, so that cutting diameters of the cutting units 82, 83 and 84 are sequentially increased. The cutting elements 821, 831 and 841 with equal length settings have good interchangeability and can reduce the replacement cost of the cutting elements 821, 831 and 841.

Furthermore, referring to FIG. 7 to FIG. 9, an installation portion 64 for installing the cutting units may be arranged on the periphery of the cutterhead or the bracket. The installation portion 64 may be independently connected to the cutterhead or the bracket, or may be integrally formed with the cutterhead or the bracket.

The cutting elements may be fixed to the installation portion 64 through a connecting piece. The connecting piece may be a screw, and the installation portion 64 is provided with a threaded hole that matches the screw. By using screw connection, the cutting elements may be fixed at a lower cost. Certainly, as a possible implementation, commonly known modes in this field such as riveting, welding, or bonding may also be used to fix the cutting elements.

In some implementations, a gap may be arranged between the cutting elements and the installation portion 64 to form a flail knife structure, ensuring that the cutting elements can rotate within the gap. In a process of the cutting operation, the cutting elements rotate to a direction away from a rotation center under the action of centrifugal force. When encountering obstacles such as stones or branches, the cutting elements may freely rotate in the gap to avoid damage, thereby reducing the maintenance cost.

This example of this application does not impose specific limitations on the structures of the cutting elements, and the structures of the cutting elements may be any known form in the industry. Specifically, the cutting elements may be metal or non-metallic elements such as blades and metal wires. Optionally, the cutting elements are the blades, the blades include base portions and edges, and the edges are at least partially arranged on the peripheries of the base portions. Each blade may be in a regular or irregular shape, such as a circle, a rectangle, or other shapes.

In some implementations, a height difference between the two adjacent cutting units is preferably 8 mm to 25 mm, for example, the height difference may be 8 mm, 10 mm, 12 mm, 14 mm, 16 mm, 18 mm, 20 mm, 22 mm, or 25 mm. The above settings are conducive to balancing the power consumption and grass crushing quality of the lawn mower, and make it easier for the broken grass after cutting to penetrate into gaps of the grassland. When the height difference is too low, such as less than 10 mm, it will lead to an increase in the load of the cutting device, further leading to an increase in driving energy consumption. When the height difference is too large, such as greater than 15 mm, it will make the cut broken grass longer and less likely to penetrate into the gaps of the grassland, affecting the appearance of the lawn. If there is a lot of long grass cuttings, it often needs to be cut again, which further affects the cutting efficiency. Certainly, this example of this application does not impose specific limitations on this and adjustment may be made according to actual working conditions.

In some implementations, the heights H of the plurality of cutting units meet 27 mm$\leq$H$\leq$75 mm. For example, H may be taken as 27 mm, 30 mm, 35 mm, 40 mm, 45 mm, 50 mm, 55 mm, 60 mm, 65 mm, 70 mm, 75 mm, etc. According to research, it may be seen that the length of grass to be mowed in user's home in the American lawn mowing market is usually less than 3 inches, with the majority ranging from 2 inches to 2.5 inches. Through the above settings, the cutting device may meet the cutting needs of most home courtyards in the America market. This example of this application does not impose any limitations on whether the height difference between the adjacent cutting units is the same. For example, as a possible implementation, the height difference between the different cutting units may be set to be different. Alternatively, as another possible implementation, the height difference between the different cutting units may be set to be the same.

In some implementations, a cutting diameter of the cutting device may be set to be greater than or equal to 180 mm, for example, the cutting diameter may be 180 mm, 200 mm, 240 mm, 280 mm, 300 mm, 330 mm, 340 mm, or 356 mm. This allows the cutting device to have a larger cutting width, which can effectively improve the cutting efficiency. In addition, at the equal rotational speed, the larger the diameter of the cutting device, the greater the kinetic energy of a blade tip part, which can further improve the cutting efficiency. Optionally, the cutting diameter of the cutting unit on the bottom layer is less than or equal to 340 mm, so as to ensure the miniaturization of the overall size of the cutting mechanism.

In some implementations, the rotational speed of the cutting device may optionally be less than or equal to 4000 r/min. It is to be pointed out that the magnitude of the cutting time difference is inversely proportional to the rotational speed of the cutting device. The lower the rotational speed, the greater the cutting time difference, which can help the cutting device better avoid the temporal grass leakage. When the rotational speed of the cutting device is high, although the cutting kinetic energy increases, the cutting time difference correspondingly decreases. If the cutting time difference at this time is not enough to complete the rebound of the grass bodies, it will still lead to the temporal grass leakage. Therefore, the rotational speed of the cutting device should be selected with a larger value to improve efficiency on the basis of meeting the requirements of the cutting time difference. This example of this application sets the rotational speed of the cutting device to be less than or equal to 4000 r/min, so that the cutting device can have both the better cutting efficiency and cutting quality.

In some implementations, the number of the cutting elements in the single cutting unit is less than or equal to 5, for example, it may be 1, 2, 3, 4, or 5. Certainly, in other implementations, the number of the cutting elements is not limited to this. On the premise of ensuring the value of the cutting time difference, it can be set according to actual needs. Under the condition of the equal rotational speed, the more cutting elements there are, the smaller the cutting time difference between the adjacent cutting elements. In addition, the service life of the cutting elements is negatively correlated with the number of the cutting elements. The more cutting elements there are, the smaller the loss of the cutting elements, and the longer the corresponding service life of the cutting elements. Therefore, a larger number of cutting elements should be selected on the premise of ensuring the cutting time difference, so that the cutting device has a longer service life and a larger cutting time difference. This example of this application sets the number of the cutting elements in the single cutting unit to be 3, so that the cutting device has both a larger cutting time difference and a longer service life. It is to be pointed out that the cutting elements described in this application are all elements used for performing the cutting task. If a blade is arranged on the cutterhead but is not used for cutting, it is not to be understood as the cutting elements described in this application.

Meanwhile, this example of this application does not impose any limitation on whether the number of the cutting elements in each cutting unit is the same or not. For example, as a possible implementation, the number of the cutting elements in the different cutting units may be set to be different. Alternatively, as another possible implementation, the number of the cutting elements in the different cutting units may be set to be the same. In one example of this application, the plurality of cutting elements in the same cutting unit may be uniformly arranged in a rotation direction of the cutting device, so that the cutting device can balance the load during operation so as to reduce the power consumption of the driving device.

In some implementations, the cutting element has a blade tip part that comes into contact with the grass in the cutting process. The ratio of the kinetic energy of the blade tip part to the single cutting amount of the cutting element has a significant impact on the cutting quality, and the magnitude of the above ratio is basically proportional to the cutting quality.

A detailed explanation of the kinetic energy of the blade tip part is made below with reference to the accompanying drawings and the aforementioned single cutting amount.

For the kinetic energy of the blade tip, when the cutting operation is performed under the same condition mentioned above, a section with an $X_0$ (mm) length (i.e. the blade tip part of the cutting element) at one end of the single cutting element away from the rotation center (i.e. the farthest end of the cutting element) first comes into contact with the grass. In combination with FIG. 4, taking the cutting element 311 in the cutting unit 31 on the bottom layer as an example, the rotation diameter (i.e. a maximum cutting width of the cutting device) of the farthest end of the cutting element is D (mm), a width of the cutting element is b (mm), a weight of the blade tip part of the cutting element is $m_{X0}$, and w represents an angular speed of the blade tip part. At this time, based on the above conditions, it can be concluded that the kinetic energy E(J) of the blade tip part of the cutting element is:

$$E = 0.5 I w^2$$

where, I represents a rotational inertia of the blade tip part, which may be represented as:

$$I = \frac{m_{X0}}{12}(b^2 + X0^2) + m_{X0}\frac{(D-X0)^2}{4};$$

therefore, a ratio $E_0$ (J/mm) of the kinetic energy of the blade tip part of the cutting element to the single cutting amount of the cutting element is:

$$E_0 = \frac{E}{X_0}$$

In some implementations, the above ratio $E_0$ of the kinetic energy of the blade tip part of the cutting element to the single cutting amount of the cutting element is preferably set to be greater than or equal to 0.1 J/mm. At this time, the blade tip part has a larger cutting kinetic energy, which prevents the blade from avoiding and being unable to cut grass during cutting, thus achieving the better cutting quality. When the above ratio $E_0$ is less than 0.1, it indicates that the kinetic energy of the blade tip part is smaller and/or the single cutting amount is larger. If the kinetic energy of the blade tip part is smaller, there may be a situation where the cutting device cannot cut the grass due to insufficient kinetic energy when making contact with the grass bodies, resulting in a reduction in the cutting quality. The larger the single cutting amount, the greater the cutting resistance of the cutting device during operation, and the higher the required driving power. At the same time, due to the larger length range of the grass cut, in some cases, the grass cannot be completely cut, reducing the cutting efficiency. This example of this application sets the ratio $E_0$ to be greater than 0.1, so that the cutting device can have both the higher cutting efficiency and cutting quality.

In some implementations, continuing to referring to FIG. 4, taking a cutting element 311 in the cutting unit 31 closest to the working surface during the execution of the cutting task as an example, the cutting element 311 may form a bottom cutting domain during the execution of the cutting task, and includes an exposed part with a length L and located outside a cutterhead coverage range to which the cutting element 311 belongs. A ratio N of the length of the exposed part of the cutting element 311 to the single cutting amount is:

$$N = \frac{L}{X_0} = \frac{nN_2L}{60*1000V}$$

The ratio N of the length of the exposed part of the cutting element to the single cutting amount reflects the number of times the grass in the same area is cut by the cutting element in the same layer. The length of the same area is equal to the single cutting amount of the cutting element. The above ratio N is also known as the number of times of repeated cuts.

According to the above equation, the magnitude of the ratio N is positively correlated with the length L of the exposed part, the number $N_2$ of the single-layer blades, and the rotational speed n of the cutterhead, and negatively correlated with a moving speed v of the cutting device.

The ratio N reflects the number of times the grass in the same area is cut. The larger the ratio N, the more times the cutting elements on the same layer pass through the same area, the smoother the cutting, the less likely grass leakage, and the better the cutting effect. In other words, increasing the number of times of repeated cuts can relieve the structural grass leakage and temporal grass leakage problems of the cutting device in a bottom-up manner. When the ratio N is too small, there is a risk of grass leakage, which reduces the cutting quality. Therefore, in one example of this application, the ratio N may be set to be greater than or equal to 2.3. Further, the ratio N may be set to be greater than or equal to 3.4. Still further, the ratio N may be set to be greater than or equal to 4.

In this example of this application, the exposed length of the part of the cutting element that exposes the cutterhead may be set according to the actual situation. For example, in order to increase the number of times of repeated cuts and improve the cutting efficiency, the exposed length may be set to be a larger value. When the length of the exposed part is smaller, the number of times of repeated cuts of the cutting element correspondingly decreases, resulting in lower efficiency of the cutting device. In one example of this application, the exposed length of the cutting element is preferably set to be greater than or equal to 55 mm. In one example of this application, the exposed length of the cutting element is preferably set to be greater than or equal to 57 mm.

In some implementations, as shown in FIG. 10, the plurality of cutting units further include remaining cutting units connected with the bottom cutting unit, the remaining cutting units are connected with the driving device through a first connecting portion, and the bottom cutting unit is connected with the first connecting portion through a second connecting portion; where, in the second direction A2, a second preset spacing S2 is provided between an edge of the bottom cutting domain and the first connecting portion, and the second preset spacing S2 meets S2≥S1. When executing the cutting task, the first connecting portion will touch the grass ahead of the bottom layer (bottom) of cutting element, forming pressed grass and affecting the cutting of the blade on the bottom layer. By setting the second preset spacing S2 to be greater than or equal to the first preset spacing S1, the grass leakage caused by the pressed grass of the first connecting portion in cutting can be effectively compensated, thereby improving the cutting quality.

Optionally, a range of the second preset spacing S2 may be between 10 mm and 40 mm. For example, S2 may be taken as 10 mm, 15 mm, 20 mm, 25 mm, 30 mm, 35 mm, or 40 mm. If S2 is too small, such as less than 10 mm, it is difficult to compensate for cutting the pressed grass of the first connecting portion. If S2 is too large, such as greater than 40 mm, it is difficult to ensure the miniaturization of the overall size of the cutting mechanism.

The above provides a detailed explanation of the cutting device provided by this example of this application and the important parameters that affect the cutting effect. The above parameters may be combined with each other, and the cutting quality of the lawn mower may also be improved by reasonably configuring various parameters in the cutting device.

This example of this application further provides another cutting mechanism that can be used at least for relieving a problem of temporal grass leakage of the cutting mechanism with multi-layer blades.

The cutting mechanism includes a driving device and a cutting device connected with the driving device, the cutting device is configured to execute a cutting task under driving of the driving device, the cutting device includes a plurality of cutting units stacked in a first direction, and each cutting unit includes at least one cutting element; and in two cutting units closest to a working surface, one cutting unit has a first cutting element arranged in a first phase, the other cutting unit has a second cutting element arranged in a second phase, and a phase difference between the first cutting element and the second cutting element is configured to cause the first cutting element and the second cutting element to sequentially cut grass at the same position within a single rotation cycle of the cutting device.

The above cutting mechanism can provide sufficient rebound time for the grass, which is conducive for the cutting elements of the adjacent layers at the bottom to cut the grass, thereby effectively relieving the problem of the temporal grass leakage and improving the cutting quality of the cutting mechanism.

In some implementations, a cutting time difference T for the first cutting element and the second cutting element to sequentially cut the grass at the same position within the single rotation cycle of the cutting device meets T≥5.5 ms.

If the cutting time difference is set to be less than 5.5 ms, the rotational speed is usually too high. On the one hand, the cutting time difference is too small to make the grass bodies rebound, affecting the cutting efficiency and grass crushing quality. On the other hand, it can also lead to an increase in power consumption. The larger the cutting time difference between the adjacent cutting elements, the more sufficient the rebound of the grass bodies, resulting in the higher cutting efficiency. Furthermore, the cutting time difference may be set to be greater than or equal to 8 ms.

This example of this application further provides another cutting mechanism that can relieve a problem of structural grass leakage and a problem of temporal grass leakage of the cutting mechanism with multi-layer blades in a bottom-up manner.

The cutting mechanism includes a driving device and a cutting device connected with the driving device, the cutting device is configured to execute a cutting task under driving of the driving device, the cutting device includes a plurality of cutting units stacked in a first direction, and each cutting unit includes at least one cutting element; the plurality of cutting units are connected with the driving device through a connecting portion; a bottom cutting unit closest to a working surface has an exposed cutting part beyond the connecting portion; and in at least one second direction perpendicular to the first direction, a length L of the exposed cutting part and the single cutting amount $X0$ of the cutting device meets a relationship equation: $L/X0 \geq 2.3$; where, the single cutting amount $X0$ represents a length of a part of the cutting device that comes into contact with grass in a single cutting process.

According to the cutting mechanism mentioned above, its cutting element on the bottom layer can repeatedly cut grass in the same area, thereby effectively avoiding the occurrence of grass leakage in this area, ensuring the cutting smoothness of a lawn in that area, and improving the cutting quality of the lawn in this area. It may be understood that the number of times of repeated cuts is related to a moving speed of the cutting device. Therefore, how to determine the appropriate minimum number of times of repeated cuts while considering cutting efficiency is the original point of this example. Exemplarily, this example may effectively balance the cutting efficiency and relieve the grass leakage during cutting by determining that the number of times of repeated cuts is greater than or equal to 2.3.

In some implementations, the number of times of repeated cuts may be greater than or equal to 3.4. This is conducive to further improving the cutting quality.

In some implementations, the length of the exposed cutting part of the cutting unit on the bottom layer is greater than or equal to 55 mm. There is a formula that shows that the length of the exposed cutting part is also related to the minimum number of times of repeated cuts, and the exposed cutting part of the cutting unit on the bottom layer is also related to the overall size of a lawn mower with the cutting mechanism installed. Therefore, how to determine the length of the exposed cutting part while balancing the cutting efficiency and the overall size of the lawn mower is the original point of this example. Exemplarily, this example may effectively balance the cutting efficiency and the overall size of the lawn mower and relieve the grass leakage during cutting by determining that the length of the exposed cutting part is greater than or equal to 55 mm.

This example of this application further provides another cutting mechanism that can be used at least for relieving a problem of long grass cuttings caused by structural grass leakage of the cutting mechanism with multi-layer blades.

The cutting mechanism includes a driving device and a cutting device connected with the driving device, the cutting device is configured to execute a cutting task under driving of the driving device, the cutting device includes a plurality of cutting units stacked in a first direction, each cutting unit includes at least one cutting element, and each cutting unit forms a cutting domain when executing the cutting task; in at least one second direction perpendicular to the first direction, a first preset spacing S 1 is provided between edges of cutting domains of at least one set of two adjacent cutting units, the first preset spacing S 1 meets

$$S1 \geq \frac{30000V}{nN_2}$$

, and the edges of the cutting domains of the cutting units close to the working surface are closer to the driving device, where, V represents a moving speed of the cutting device during the execution of the cutting task, n represents a rotational speed of the cutting device during the execution of the cutting task, and $N_2$ represents the number of the cutting elements in each cutting unit.

The above cutting mechanism may effectively relieve the problem of long grass cuttings generated during cutting due to the compact setting of the adjacent layers of blades of the cutting mechanism in a horizontal direction, thereby advantageously ensuring the grass crushing effect of the cutting mechanism and improving the cutting quality.

In some implementations, the plurality of cutting units are connected with the driving device through a connecting portion; among the plurality of cutting units, a bottom cutting unit closest to a working surface has an exposed cutting part beyond the connecting portion; and in at least one second direction, a length L of the exposed cutting part and the single cutting amount $X0$ of the cutting device meets a relationship equation: $L/XO > 2.3$; where, the single cutting amount $X0$ represents a length of a part of the cutting device that comes into contact with grass in a single cutting process. In this way, repeated cutting of the same area by blades on the bottom layer is beneficial for relieving the problem of grass leakage of the cutting mechanism.

In some implementations, the first preset spacing S 1 meets $S1 \geq \frac{48000V}{nN_2}$ . In this way, it is conducive to meeting the cutting quality requirements of most home courtyards, and at the same time, this lower limit size can also consider control of the overall size of the lawn mower.

This example of this application further provides another cutting mechanism that can be used at least for relieving a problem of long grass cuttings caused by temporal grass leakage of the cutting mechanism with multi-layer blades.

The cutting mechanism includes a driving device and a cutting device connected with the driving device, the cutting device is configured to execute a cutting task under driving of the driving device, the cutting device includes a plurality of cutting units stacked in a first direction, and each cutting unit includes at least one cutting element; and in at least one set of two adjacent cutting units, one cutting unit has a first cutting element arranged in a first phase, the other cutting unit has a second cutting element arranged in a second phase, and a phase difference between the first cutting element and the second cutting element is configured to cause the first cutting element and the second cutting element to sequentially cut grass at the same position within a single rotation cycle of the cutting device.

The above cutting mechanism may effectively relieve the problem of long grass cuttings generated during cutting due to the too short cutting time difference between the adjacent layers of blades of the cutting mechanism, and the inability of the grass to fully rebound, thereby advantageously ensuring the grass crushing effect of the cutting mechanism and improving the cutting quality.

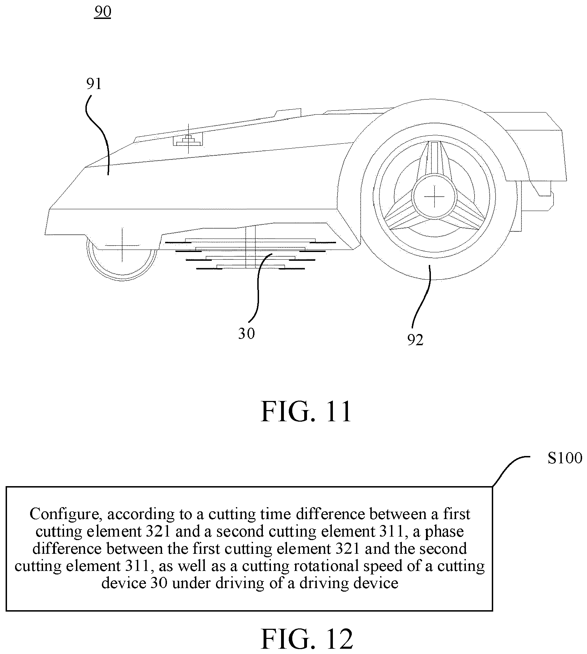

The cutting mechanism provided in the above examples of this application may be used for being installed on a lawn mower. Indeed, it may also be applied to other electric cutting tools. The following is a brief description of a lawn mower provided by an example of this application with reference to FIG. 11.

Referring to FIG. 11, which is a schematic structural diagram of a lawn mower 90 provided by an example of this application, and the lawn mower may include a housing 91, a moving assembly 92, a cutting device 30, and a driving device (not shown).

The housing 91 is used for accommodating the cutting device 30 and providing an installation space for the moving assembly 92 and a driving assembly. Meanwhile, the housing 91 can further provide safety protection to prevent pedestrians or animals from being cut by the cutting device 30.

The moving assembly 92 is arranged inside the housing 91 and is used for driving the lawn mower 90 to move. The moving assembly may include a drive controller, a drive motor, a steering engine, tires, etc.

The driving device is arranged inside the housing 91, and includes a motor and an output shaft connected with the motor and the cutting device 30 respectively, so as to drive the cutting device 30 to rotate.

The cutting device 30 responds to the drive of the driving device and further drives the cutting element to rotate, so as to trim a lawn.

The above text describes the apparatus examples of this application with reference to FIG. 4 to FIG. 10, and the following describes a method example of this application with reference to FIG. 12. A preparation method provided by this example of this application is used for preparing any of the mechanisms introduced above, and the specific structure of the mechanisms may be referred to the description above.

FIG. 12 shows a schematic flowchart of a preparation method of a cutting mechanism provided by this example of this application. This method may be used for preparing the cutting mechanism, the cutting mechanism includes a cutting device 30 as shown in FIG. 3, and the cutting device 30 can execute a cutting task under the driving of a driving device. The cutting device 30 may include a plurality of cutting units 31, 32 and 33 stacked on the upper and lower layers. Each cutting unit includes at least one cutting element 311, 321 and 331.

Continuing to refer to FIG. 3, among the two adjacent cutting units 31 and 32, one cutting unit 32 has a first cutting element 321, and the other cutting unit 31 has a second cutting element 311. A cutting time difference between the first cutting element 321 and the second cutting element 311 is greater than or equal to a preset time, so that the first cutting element 321 and the second cutting element 311 can sequentially cut grass at the same position within a single rotation cycle of the cutting device 30.

The method shown in FIG. 12 may include step S100.

In step S100, according to the cutting time difference between the first cutting element 321 and the second cutting element 311, a phase difference between the first cutting element 321 and the second cutting element 311, as well as a cutting rotational speed of the cutting device 30 under the driving of the driving device are configured.

Optionally, the first cutting element 321 and the second cutting element 311 are the two adjacent cutting elements. That is to say, the phase difference between the two adjacent cutting elements, as well as the cutting rotational speed of the cutting device under the driving of the driving device may be configured according to the cutting time difference between the two adjacent cutting elements.

The above is only a specific implementation of this application, but the scope of protection of this application is not limited to this. Any changes or replacements that can be easily thought of by technical personnel familiar with the technical field within the technical scope disclosed in this application need to be covered within the scope of protection of this application. Moreover, the technical features of the above examples may be randomly combined. For concise description, not all possible combinations of the technical features in the above examples are described. However, provided that the combinations of the technical features do not conflict with each other, the combinations of the technical features are considered as falling within the scope described in this specification. Therefore, the protection scope of this application needs to be subjected to the protection scope of the claims.

**Claims**

1. A cutting mechanism, comprising a driving device and a cutting device connected with the driving device, wherein the cutting device is configured to execute a cutting task under driving of the driving device, the cutting device comprises a plurality of cutting units stacked in a first direction, each cutting unit comprises at least one cutting element, and each cutting unit forms a cutting domain when executing the cutting task; **characterized in that**,

   in at least one second direction perpendicular to the first direction, a first preset spacing S1 is provided between edges of cutting domains of two cutting units closest to a working surface, the first preset spacing S1 meets

   $$S1 \geq \frac{30000V}{nN_2}$$, and the edges of the cutting domains of the cutting units closest to the working surface are closer to the driving device in the second direction,

   wherein, V represents a moving speed of the cutting device during the execution of the cutting task, n represents a rotational speed of the cutting device during the execution of the cutting task, and $N_2$ represents the number of the cutting elements in each cutting unit.

2. The cutting mechanism according to claim 1, **characterized in that**, further having another set of two adjacent cutting units, wherein one cutting unit has a cutting domain during the execution of the cutting task, and the other cutting unit has another cutting domain during the execution of the cutting task; and
   in the at least one second direction perpendicular to the first direction, a spacing between edges of the cutting domains of the two cutting units is greater than or equal to $\frac{30000V}{nN_2}$, and the edges of the cutting domains of the cutting units close to the working surface are closer to the driving device in the second direction.

3. The cutting mechanism according to claim 1, **characterized in that**, in any two adjacent cutting units, one cutting unit has a cutting domain during the execution of the cutting task, and the other cutting unit has another cutting domain during the execution of the cutting task; and
   in the at least one second direction perpendicular to the first direction, a spacing between edges of the cutting domains of the two cutting units is greater than or equal to $\frac{30000V}{nN_2}$, and the edges of the cutting domains of the cutting units close to the working surface are closer to the driving device in the second direction.

4. The cutting mechanism according to claim 1, **characterized in that**, the first preset spacing S1 meets $S1 \geq \frac{48000V}{nN_2}$.

5. The cutting mechanism according to any one of claims 1 to 4, **characterized in that**, the first preset spacing S1 is greater than or equal to the single cutting amount $X_0$ of the cutting unit, and the single cutting amount $X_0$ represents a length of a part of the cutting device that comes into contact with grass in a single cutting process.

6. The cutting mechanism according to any one of claims 1 to 4, **characterized in that**, the first preset spacing S1 meets 10 mm$\leq$S1$\leq$25 mm.

7. The cutting mechanism according to any one of claims 1 to 4, **characterized in that**, a height difference Y between any two adjacent cutting units meets 8 mm$\leq$Y$\leq$25 mm.

8. The cutting mechanism according to any one of claims 1 to 4, **characterized in that**, a thickness K of the at least one cutting element meets 0.6 mm$\leq$K$\leq$2 mm.

9. The cutting mechanism according to any one of claims 1 to 4, **characterized in that**, the at least one cutting element has two opposite cutting sides, and each cutting side is provided with a cutting edge.

10. The cutting mechanism according to any one of claims 1 to 4, **characterized in that**, the cutting edge of the at least one cutting element is a double-sided edge.

11. The cutting mechanism according to claim 1, **characterized in that**, in the two cutting units closest to the working surface, one cutting unit has a first cutting element arranged in a first phase, the other cutting unit has a second cutting element arranged in a second phase, and a phase difference between the first cutting element and the second cutting element is configured to cause the first cutting element and the second cutting element to sequentially cut grass at the same position within a single rotation cycle of the cutting device.

12. The cutting mechanism according to claim 11, **characterized in that**, the first cutting element and the second cutting element are arranged adjacent to each other in phase.

13. The cutting mechanism according to claim 11 or 12, **characterized in that**, a cutting time difference T for the first cutting element and the second cutting element to sequentially cut the grass at the same position within the single rotation cycle of the cutting device meets $T \geq 5.5$ ms.

14. The cutting mechanism according to claim 1, **characterized in that**,

the plurality of cutting units are connected with the driving device through a connecting portion;
the bottom cutting unit closest to the working surface forms a bottom cutting domain when executing the cutting task, and the bottom cutting unit has an exposed cutting part beyond the connecting portion; and
in the at least one second direction, a length L of the exposed cutting part and the single cutting amount X0 of the cutting device meets a relationship equation: L/XO>2.3;
wherein, the single cutting amount $X_0$ represents a length of a part of the cutting device that comes into contact with grass in a single cutting process.

15. The cutting mechanism according to claim 14, **characterized in that**, $L/X0 \geq 3.4$.

16. The cutting mechanism according to claim 14, **characterized in that**, $L \geq 55$ mm.

17. The cutting mechanism according to claim 14, **characterized in that**, the plurality of cutting units further comprise remaining cutting units connected with the bottom cutting unit, the remaining cutting units are connected with the driving device through a first connecting portion, and the bottom cutting unit is connected with the first connecting portion through a second connecting portion;

in the at least one second direction, a second preset spacing S2 is provided between an edge of the bottom cutting domain and the first connecting portion, and the first connecting portion is closer to the driving device; and the second preset spacing S2 meets $S2 \geq S1$.

18. The cutting mechanism according to claim 14, **characterized in that**, a cutting diameter d of the bottom cutting domain meets $180 \text{ mm} \leq d \leq 340 \text{ mm}$.

19. The cutting mechanism according to claim 1, **characterized in that**, the driving device drives the cutting device to rotate at a rotational speed less than or equal to 4000 r/min.

20. The cutting mechanism according to claim 1, **characterized in that**, each cutting unit has a blade tip part that comes into contact with grass during the execution of the cutting task, a ratio of kinetic energy of the blade tip part to the single cutting amount $X_0$ of the cutting device is greater than 0.1 J/mm, and the single cutting amount $X_0$ represents a length of a part of the cutting unit that comes into contact with grass in a single cutting process.

21. The cutting mechanism according to claim 1, **characterized in that**, the number of the cutting elements in each cutting unit is less than or equal to 5.

22. The cutting mechanism according to claim 1, **characterized in that**, a height H of the plurality of cutting units meets $27 \text{ mm} \leq H \leq 75 \text{ mm}$.

23. A cutting mechanism, comprising a driving device and a cutting device connected with the driving device, wherein the cutting device is configured to execute a cutting task under driving of the driving device, the cutting device comprises a plurality of cutting units stacked in a first direction, and each cutting unit comprises at least one cutting element;
   **characterized in that**,
   in two cutting units closest to a working surface, one cutting unit has a first cutting element arranged in a first phase, the other cutting unit has a second cutting element arranged in a second phase, and a phase difference between the first cutting element and the second cutting element is configured to cause the first cutting element and the second cutting element to sequentially cut grass at the same position within a single rotation cycle of the cutting device.

24. The cutting mechanism according to claim 23, **characterized in that**, a cutting time difference T for the first cutting element and the second cutting element to sequentially cut the grass at the same position within the single rotation cycle of the cutting device meets $T \geq 5.5$ ms.

25. A cutting mechanism, comprising a driving device and a cutting device connected with the driving device, wherein the cutting device is configured to execute a cutting task under driving of the driving device, the cutting device comprises a plurality of cutting units stacked in a first direction, and each cutting unit comprises at least one cutting element;
   **characterized in that**,

   the plurality of cutting units are connected with the driving device through a connecting portion;
   a bottom cutting unit closest to a working surface has an exposed cutting part beyond the connecting portion;
   in at least one second direction perpendicular to the first direction, a length L of the exposed cutting part and the single cutting amount X0 of the cutting device meets a relationship equation: $L/X0 \geq 2.3$;
   wherein, the single cutting amount $X_0$ represents a length of a part of the cutting device that comes into contact with grass in a single cutting process.

26. The cutting mechanism according to claim 25, **characterized in that**, $L/X0 \geq 3.4$.

27. The cutting mechanism according to claim 25, **characterized in that**, $L \geq 55$ mm.

28. A cutting mechanism, comprising a driving device and a cutting device connected with the driving device, wherein the cutting device is configured to execute a cutting task under driving of the driving device, the cutting device comprises a plurality of cutting units stacked in a first direction, each cutting unit comprises at least one cutting element, and each cutting unit forms a cutting domain when executing the cutting task;
   **characterized in that**,

   in at least one second direction perpendicular to the first direction, a first preset spacing S1 is provided between edges of cutting domains of at least one set of two adjacent cutting units the first preset spacing S1 meets $S1 \geq \dfrac{30000V}{nN_2}$, and an edge of a cutting domain of a cutting unit close to a working surface is closer to the driving device,
   wherein, V represents a moving speed of the cutting device during the execution of the cutting task, n represents a rotational speed of the cutting device during the execution of the cutting task, and $N_2$ represents the number of the cutting elements in each cutting unit.

29. The cutting mechanism according to claim 28, **characterized in that**,

   the plurality of cutting units are connected with the driving device through a connecting portion;
   in the plurality of cutting units, a bottom cutting unit closest to the working surface has an exposed cutting part beyond the connecting portion;
   in the at least one second direction, a length L of the exposed cutting part and the single cutting amount X0 of the cutting device meets a relationship equation: $L/XO > 2.3$;
   wherein, the single cutting amount $X_0$ represents a length of a part of the cutting device that comes into contact with grass in a single cutting process.

30. The cutting mechanism according to claim 28, **characterized in that**, the first preset spacing S1 meets $S1 \geq \dfrac{48000V}{nN_2}$.

31. A cutting mechanism, comprising a driving device and a cutting device connected with the driving device, wherein the cutting device is configured to execute a cutting task under driving of the driving device, the cutting device comprises a plurality of cutting units stacked in a first direction, and each cutting unit comprises at least one cutting element;

**characterized in that**,

in at least one set of two adjacent cutting units, one cutting unit has a first cutting element arranged in a first phase, the other cutting unit has a second cutting element arranged in a second phase, and a phase difference between the first cutting element and the second cutting element is configured to cause the first cutting element and the second cutting element to sequentially cut grass at the same position within a single rotation cycle of the cutting device.

32. A lawn mower, comprising:

a housing;
a moving device, connected with the housing and driving the lawn mower to move; and
the cutting mechanism according to any one of claims 1 to 31, installed on the housing and used for executing a cutting task.

10

12(121)          13(131)

11

13(132)                              12(123)

n

12(122)          13(133)

FIG. 1

FIG. 2

FIG. 3

FIG. 4

40

FIG. 5

50

FIG. 6

FIG. 7

FIG. 8

80

84(841)  81

83(831)

82(821)  64

FIG. 9

FIG. 10

90

91

30

92

## FIG. 11

S100

Configure, according to a cutting time difference between a first cutting element 321 and a second cutting element 311, a phase difference between the first cutting element 321 and the second cutting element 311, as well as a cutting rotational speed of a cutting device 30 under driving of a driving device

## FIG. 12

## INTERNATIONAL SEARCH REPORT

| International application No. |
| --- |
| **PCT/CN2022/125652** |

| A. | CLASSIFICATION OF SUBJECT MATTER |
| --- | --- |
| | A01D 34/73(2006.01)i;  A01D 34/74(2006.01)i |

According to International Patent Classification (IPC) or to both national classification and IPC

| B. | FIELDS SEARCHED |
| --- | --- |

Minimum documentation searched (classification system followed by classification symbols)
      A01D

Documentation searched other than minimum documentation to the extent that such documents are included in the fields searched

Electronic data base consulted during the international search (name of data base and, where practicable, search terms used)
      CNABS; VEN; CNTXT; EPTXT; WOTXT; USTXT; CNKI: 宝时得, 割草机, 除草机, 切割, 刀, 高度, 层叠, 两层, 多层, 多次, 反复, 漏草, 漏割, 碎草, 切割量, mower, blade, cut+, height, layer, radius, diameter, multiple

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021032168 A1 (POSITEC POWER TOOLS SUZHOU CO., LTD. NON SMALL ENTITY) 25 February 2021 (2021-02-25)<br>description, pages 5-10, and figures 1-5 | 1-32 |
| X | US 10349576 B1 (JONES CHARLES M) 16 July 2019 (2019-07-16)<br>description, column 4, line 46 to column 9, line 31, and figures 1-11 | 23-27, 31-32 |
| A | JP H1156065 A (KYOEISHA KK) 02 March 1999 (1999-03-02)<br>entire document | 1-32 |
| A | US 2021185911 A1 (HUSQVARNA AB) 24 June 2021 (2021-06-24)<br>entire document | 1-32 |
| A | US 2019045707 A1 (PATRIDGE ARTHUR GARY) 14 February 2019 (2019-02-14)<br>entire document | 1-32 |
| A | CN 103843516 A (POSITEC POWER TOOLS (SUZHOU) CO., LTD.) 11 June 2014 (2014-06-11)<br>entire document | 1-32 |
| A | US 4351144 A (BENENATI SALVATORE) 28 September 1982 (1982-09-28)<br>entire document | 1-32 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 December 2022** | **15 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/125652**

**C.    DOCUMENTS CONSIDERED TO BE RELEVANT**

| Category* | Citation of document, with indication, where appropriate, of the relevant passages | Relevant to claim No. |
|---|---|---|
| A | JP 2003180118 A (CHIKUSUI CANYCOM INC.) 02 July 2003 (2003-07-02)<br>entire document | 1-32 |

Form PCT/ISA/210 (second sheet) (January 2015)

## INTERNATIONAL SEARCH REPORT
### Information on patent family members

| International application No. |
| --- |
| **PCT/CN2022/125652** |

| Patent document cited in search report | | | Publication date (day/month/year) | Patent family member(s) | | | Publication date (day/month/year) |
| --- | --- | --- | --- | --- | --- | --- | --- |
| WO | 2021032168 | A1 | 25 February 2021 | US | 2022272897 | A1 | 01 September 2022 |
| | | | | EP | 4018807 | A1 | 29 June 2022 |
| | | | | CN | 210987056 | U | 14 July 2020 |
| | | | | CN | 112400453 | A | 26 February 2021 |
| | | | | CN | 114364250 | A | 15 April 2022 |
| US | 10349576 | B1 | 16 July 2019 | | None | | |
| JP | H1156065 | A | 02 March 1999 | | None | | |
| US | 2021185911 | A1 | 24 June 2021 | WO | 2020011524 | A1 | 16 January 2020 |
| | | | | SE | 1850895 | A1 | 13 January 2020 |
| | | | | EP | 3820272 | A1 | 19 May 2021 |
| | | | | SE | 544260 | C2 | 15 March 2022 |
| US | 2019045707 | A1 | 14 February 2019 | | None | | |
| CN | 103843516 | A | 11 June 2014 | CN | 103843516 | B | 30 March 2016 |
| US | 4351144 | A | 28 September 1982 | | None | | |
| JP | 2003180118 | A | 02 July 2003 | | None | | |

Form PCT/ISA/210 (patent family annex) (January 2015)